# EUROPÄISCHE PATENTANMELDUNG

(11) **EP 4 480 730 A1**
(43) Veröffentlichungstag der Anmeldung: **25.12.2024**
(21) Anmeldenummer: 24202730.8
(22) Anmeldetag: 06.11.2019
(51) Int. Cl.: B60K 17/356, B60K 17/36, B60K 7/00, B60K 17/10, B60K 1/04, B60K 23/04, B60K 23/08, B60K 6/00, B60K 6/12, B60K 6/46, B60K 6/52

(54) **ELEKTROHYDRAULISCHE ANTRIEBSVORRICHTUNG FÜR EIN KRAFTFAHRZEUG SOWIE KRAFTFAHRZEUG MIT EINER DERARTIGEN ANTRIEBSVORRICHTUNG**

(30) Priorität: 12.11.2018 DE 102018128221
(62) Teilanmeldung aus: 22213751.5
(71) Anmelder: MAN Truck & Bus SE, 80995 München (DE)
(72) Erfinder: Fleischhacker, Jan, 80995 München (DE); Wagner, Philipp, 80995 München (DE)
(74) Vertreter: v. Bezold & Partner Patentanwälte - PartG mbB

(57) **Zusammenfassung**

Die Erfindung betrifft eine elektrohydraulische Antriebsvorrichtung (10) für ein Kraftfahrzeug (20), vorzugsweise ein Nutzfahrzeug, umfassend eine rein elektrisch antreibbare Achse (A₁), an der mindestens eine elektrische Maschine (1a) angeordnet ist, und eine elektrohydraulisch antreibbare Achse (A₂), an der mindestens eine hydraulische Maschine (2a) angeordnet ist. Weiterhin weist die elektrohydraulische Antriebsvorrichtung (10) eine erste elektrohydraulische Antriebseinrichtung (3₁) auf, die eine erste elektrische Maschine (3e₁) und eine erste hydraulische Maschine (3h₁) umfasst. Die erste hydraulische Maschine (3h₁) steht dabei mit der ersten elektrischen Maschine (3e₁) zur Leistungsübertragung in Antriebsverbindung und mit mindestens einer an der elektrohydraulisch antreibbaren Achse (A₂) angeordneten hydraulischen Maschine zur Leistungsübertragung in Fluidkommunikation. Auf vorteilhafte Weise wird dadurch ein unabhängiges und variables Bereitstellen von Antriebsmomenten an den beiden Achsen (A₁, A₂) ermöglicht, wodurch flexibel auf unterschiedliche Fahrsituationen reagiert werden kann. Ferner betrifft die Erfindung auch ein Kraftfahrzeug (20), vorzugsweise Nutzfahrzeug, mit einer derartigen elektrohydraulische Antriebsvorrichtung (10).

## Beschreibung

Die Erfindung betrifft eine elektrohydraulische Antriebsvorrichtung für ein Kraftfahrzeug sowie ein Kraftfahrzeug, vorzugsweise Nutzfahrzeug, mit einer derartigen elektrohydraulischen Antriebsvorrichtung.

Um bei Kraftfahrzeugen flexibel auf unterschiedliche Fahrsituationen (z. B. Schlupf der Antriebsräder) zu reagieren und/oder insgesamt das Fahrverhalten bzw. die Fahrstabilität zu verbessern, sind im Stand der Technik eine Reihe von Antriebskonzepten bekannt, die ein variables Verteilen der Antriebsmomente in Längs- und Querrichtung ermöglichen. Neben der Verwendung von Verteilergetrieben zur Drehmomentaufteilung existieren auch Ansätze, einzelne Achsmodule mit zusätzlichen integrierten Antriebsvorrichtungen (z. B. in Form elektrischer Radnabenmotoren) auszustatten.

Zwar ermöglicht eine derartige Montage radnaher Elektromotoren neben der Einsparung von Bauteilen (wie Gelenkwellen, Differentialgetriebe etc.) eine flexible und damit bedarfsgerechte Steuerung des Antriebs, jedoch sind diese Konzepte im Nutzfahrzeugbereich aufgrund der dort benötigten leistungsstarken und damit entsprechend großen Auslegung der Elektromotoren oftmals nicht einfach übertragbar bzw. umsetzbar. Im Speziellen im Fall von Nutzfahrzeugen mit lenkbaren angetriebenen Achsen besteht Bedarf an Bauraum und Gewicht sparender Antriebslösungen, die eine flexible Antriebmomentsteuerung ermöglichen.

Es ist daher Aufgabe der Erfindung, eine im Vergleich zum Stand der Technik verbesserte Antriebsvorrichtung für ein Kraftfahrzeug bereitzustellen. Insbesondere liegt der Erfindung die Aufgabe zugrunde, eine Antriebsvorrichtung bereitzustellen, die ein variables Verteilen der Antriebsmomente in Längs- und/oder Querrichtung ermöglicht, um dadurch flexibel auf unterschiedliche Fahrsituationen zu reagieren. Darüber hinaus soll die Antriebsvorrichtung insbesondere nicht auf den Antrieb durch einen Verbrennungsmotor angewiesen sein.

Diese Aufgaben werden durch eine elektrohydraulische Antriebsvorrichtung und ein Kraftfahrzeug mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die erfindungsgemäße elektrohydraulische Antriebsvorrichtung für ein Kraftfahrzeug, vorzugsweise ein Nutzfahrzeug, umfasst dabei eine rein elektrisch antreibbare Achse, an der mindestens eine, vorzugsweise motorisch und generatorisch betreibbare, elektrische Maschine angeordnet ist, und eine elektrohydraulisch antreibbare Achse, an der mindestens eine hydraulische Maschine, angeordnet ist. Die beiden, z. B. als Starrachsen ausgebildeten, Achsen können in diesem Zusammenhang auch als Antriebsachsen bezeichnet werden. Ferner kann eine "Anordnung" der mindestens einen elektrischen Maschine an der rein elektrisch antreibbaren Achse und/oder eine "Anordnung" der mindestens einen hydraulischen Maschine an der hydraulisch antreibbaren Achse auch dergestalt sein, dass die mindestens eine elektrische Maschine und/oder die mindestens eine hydraulische Maschine als Radnabenmaschinen ausgebildet sind.

Weiterhin weist die elektrohydraulische Antriebsvorrichtung eine erste elektrohydraulische Antriebseinrichtung auf, die eine erste, vorzugsweise motorisch und generatorisch betreibbare, elektrische Maschine und eine erste hydraulische Maschine umfasst. Die Ordnungszahlangabe "erste" dient dabei ausschließlich der besseren Unterscheidbarkeit dieser Maschinen von den bisherigen bzw. weiteren später noch genannten elektrischen/hydraulischen Maschinen. Mit anderen Worten ist die "erste" elektrische bzw. hydraulische Maschine somit nicht mit den an den antreibbaren Achsen angeordneten Maschinen identisch. Die erste hydraulische Maschine steht ferner mit der ersten elektrischen Maschine zur Leistungsübertragung in Antriebsverbindung. Anders ausgedrückt können die erste hydraulische Maschine und die erste elektrische Maschine bewegungsgekoppelt sein. Beispielsweise kann die erste hydraulische Maschine dazu über eine Welle direkt mit der ersten elektrischen Maschine antriebsmäßig verbunden sein und/oder über eine direkte Kupplung miteinander verbunden sein. Zudem steht die erste hydraulische Maschine zur Leistungsübertragung auch mit mindestens einer, an der elektrohydraulisch antreibbaren Achse angeordneten, hydraulischen Maschine in Fluidkommunikation. Anders ausgedrückt sind die besagten hydraulischen Maschinen fluidisch gekoppelt. Dies kann beispielsweise mittels in Hydraulikleitungen geführten Flüssigkeiten (z. B. Mineralöl) und/oder sonstigen dem Fachmann bekannten flüssigen Druckmedien zur hydrostatischen Leistungsübertragung erfolgen, wobei die besagten hydraulischen Maschinen vorzugsweise in einem offenen oder geschlossenen Hydraulikkreislauf angeordnet sind. Mit anderen Worten können die besagten hydraulischen Maschinen Teil eines hydrostatischen Antriebs sein. Ferner können die besagten hydraulischen Maschinen sowohl als Hydraulikpumpen und Hydraulikmotoren betreibbar sein. Auf vorteilhafte Weise wird so ein unabhängiges und variables Bereitstellen von Antriebsmomenten an den beiden Achsen ermöglicht, wodurch flexibel auf unterschiedliche Fahrsituationen reagiert werden kann.

Gemäß einem ersten Aspekt der Erfindung können die erste elektrische Maschine und die erste hydraulische Maschine der ersten elektrohydraulischen Antriebseinrichtung eine, vorzugsweise kompakte, bauliche Einheit bilden. Beispielsweise können die erste elektrische Maschine und die erste hydraulische Maschine miteinander verbunden sein, aneinander angrenzen und/oder nebeneinander angeordnet sein. Zudem oder alternativ können die erste elektrische Maschine und die erste hydraulische Maschine auch von einem gemeinsamen Gehäuse umhaust werden. All diese Merkmale haben den Vorteil, dass dadurch eine elektrohydraulische Antriebseinheit bereitgestellt wird, die den Ein- bzw. Ausbau und damit Reparaturarbeiten erleichtert sowie frei im Kraftfahrzeug angeordnet werden kann.

Nach einem weiteren Aspekt der Erfindung kann die erste elektrische Maschine der ersten elektrohydraulischen Antriebseinrichtung nicht an der rein elektrisch antreibbaren Achse oder der elektrohydraulisch antreibbaren Achse angeordnet sein. Anders ausgedrückt soll keine unmittelbare mechanische Verbindung zwischen besagten Achsen und der ersten elektrischen Maschine bestehen. Positiv formuliert ist die erste elektrische Maschine vorzugsweise achsfern angeordnet. Zudem oder alternativ kann die erste elektrische Maschine auch mit der rein elektrisch antreibbaren Achse nicht antriebsmäßig verbunden oder verbindbar sein. Mit anderen Worten kann die erste elektrische Maschine kein Antriebsmoment an die rein elektrisch antreibbare Achse übertragen. Zudem oder alternativ kann die erste elektrische Maschine der ersten elektrohydraulischen Antriebseinrichtung ausschließlich mit der zweiten hydraulischen Maschine zur Leistungsübertragung in Antriebsverbindung stehen. D. h. die erste elektrische Maschine kann ausschließlich an die der zweiten hydraulischen Maschine ein Antriebsmoment übertragen. Auf vorteilhafte Weise ermöglichen all diese Merkmale, dass die Antriebsleistung der ersten elektrischen Maschine möglichst vollständig dem hydraulischen Antrieb zur Verfügung steht, wodurch ein leistungsstarker und weitestgehend unabhängiger hydraulischer Antriebstrang bereitgestellt wird.

Gemäß einem weiteren Aspekt der Erfindung kann rein elektrisch antreibbare Achse und/oder die elektrohydraulisch antreibbare Achse eine Starrachse sein. Hierbei kann die Starrachse jeweils Radträger umfassen, die über einen unbeweglichen, starren Achskörper miteinander verbunden sind, wobei der Achskörper in diesem Zusammenhang auch als Achsgehäuse bezeichnet werden kann. Vorzugsweise kann die rein elektrisch antreibbare Achse auch eine lenkbare Starrachse sein. Auf vorteilhafte Weise kann dadurch eine einfache und robuste Radaufhängung mit stabilen Spurverhalten bereitgestellt werden. Zudem oder alternativ kann auch die elektrohydraulisch antreibbare Achse eine lenkbare Achse sein, vorzugsweise eine lenkbare Starrachse oder eine lenkbare Achse mit Einzelradaufhängungen. Weiterhin kann die elektrohydraulisch antreibbare Achse eine Vorderachse und/oder die rein elektrisch antreibbare Achse eine Hinterachse sein. Als Achse soll dabei entsprechend der Definition in B. Hei-ßing (Hrsg.) et al., Fahrwerkshandbuch (DOI 10.1007/978-3-8348-8168-7), Kapitel 4, die gesamte Verbindung zweier Räder und Radaufhängung für Einzelräder samt ihrer Anbindung an das Fahrgestell bzw. den Fahrgestellrahmen verstanden werden. Ein üblicher PKW hat damit unabhängig der konkreten Ausgestaltung zwei Achsen und vier Radaufhängungen. Als "Einzelradaufhängung" soll hingegen eine Bauart der Radführung verstanden werden, bei der sich zwei gegenüberliegende Räder unabhängig voneinander bewegen können.

Nach einem weiteren Aspekt der Erfindung kann die elektrohydraulische Antriebsvorrichtung verbrennungsmotorfrei ausgeführt sein. Mit anderen Worten soll die elektrohydraulische Antriebsvorrichtung keinen Verbrennungsmotor, z. B. einen Otto- oder Dieselmotor, umfassen. Zudem oder alternativ kann die elektrohydraulische Antriebsvorrichtung rein mit elektrischer Energie antreibbar sein. Die elektrische Energie kann dabei beispielsweise von einem elektrischen Energiespeicher, z. B. einer Traktionsbatterie, und/oder einer Brennstoffzelle, z. B. einer Wasserstoffbrennstoffzelle, bereitgestellt werden. Der Ausdruck "rein mit elektrischer Energie antreibbar" ist dabei so zu verstehen, dass ein Betrieb der elektrohydraulischen Antriebsvorrichtung durch ein Bereitstellen elektrischer Energie bzw. durch Verbinden mit einer elektrischen Energiequelle möglich ist. Dies schließt nicht aus, dass die elektrische Energie hierfür zunächst aus einer anderen Energieform, z. B. aus einer chemisch gebundenen Form, umgewandelt wird. Auch steht dies nicht im Widerspruch dazu, dass anschließend innerhalb der Antriebsvorrichtung eine Umwandlung in hydraulische bzw. schließlich mechanische Arbeit erfolgt. Zudem oder alternativ kann die elektrohydraulische Antriebsvorrichtung einen elektrischen Energiespeicher, z. B. einer Traktionsbatterie, umfassen. Hierbei kann der elektrische Energiespeicher eingerichtet sein, die mindestens eine erste elektrische Maschine und die an der rein elektrisch antreibbaren Achse angeordnete mindestens eine elektrische Maschine mit elektrischer Energie zu versorgen. Mit anderen Worten können die besagten elektrischen Maschinen über den elektrischen Energiespeicher unmittelbar mit elektrischer Energie versorgt werden. Hierbei kann der elektrische Energiespeicher in Form einer zentralen elektrischen Energiespeichereinrichtung oder aber in Form mehrerer dezentraler und vorzugsweise der jeweiligen elektrischen Maschine zugeordneten elektrischen Energiespeichereinrichtungen ausgebildet sein. Auf vorteilhafte Weise wird durch all diese Merkmale eine Antriebsvorrichtung bereitgestellt, die nicht auf den Antrieb durch einen Verbrennungsmotor angewiesen ist und sich damit besonders für den Einsatz in Elektrofahrzeugen eignet.

Nach einem weiteren Aspekt der Erfindung können an der elektrohydraulisch antreibbaren Achse zwei hydraulische Maschinen angeordnet sein, die beide zur Leistungsübertragung in Fluidkommunikation mit der ersten hydraulischen Maschine der ersten elektrohydraulischen Antriebseinrichtung stehen. Mit anderen Worten kann die erste hydraulische Maschine der ersten elektrohydraulischen Antriebseinrichtung hydraulische Leistung an beide an der elektrohydraulisch antreibbaren Achse angeordneten hydraulischen Maschinen übertragen.

Gemäß einem weiteren Aspekt der Erfindung kann die elektrohydraulische Antriebsvorrichtung ferner eine zweite elektrohydraulische Antriebseinrichtung aufweisen. Die zweite elektrohydraulische Antriebseinrichtung kann dabei eine zweite elektrische Maschine sowie eine zweite hydraulische Maschine umfassen. Wie vorstehend bereits erwähnt, dient auch hier die Ordnungszahlangabe "zweite" wiederum ausschließlich der besseren Unterscheidbarkeit der Maschinen von den bisherigen bzw. weiteren später noch genannten elektrischen/hydraulischen Maschinen. Ferner kann die zweite hydraulische Maschine mit der zweiten elektrischen Maschine zur Leistungsübertragung in Antriebsverbindung stehen sowie mit mindestens einer an der elektrohydraulisch antreibbaren Achse angeordneten hydraulischen Maschine zur Leistungsübertragung in Fluidkommunikation stehen. Auch hier kann - wie vorstehend bereits erwähnt - das Realisieren der Fluidkommunikation beispielsweise mittels in Hydraulikleitungen geführten Flüssigkeiten (z. B. Mineralöl) und/oder sonstigen dem Fachmann bekannten flüssigen Druckmedien zur hydrostatischen Leistungsübertragung erfolgen. Bevorzugt können die besagten hydraulischen Maschinen wiederum in einem offenen oder geschlossenen Hydraulikkreislauf angeordnet sein. Auch wenn - wie nachfolgend noch genauer ausgeführt - zur flexiblen Antriebsmomentverteilung die erste hydraulische Maschine der ersten elektrohydraulischen Antriebseinrichtung und die zweite hydraulische Maschine der zweiten elektrohydraulischen Antriebseinrichtung jeweils mit unterschiedlichen an der elektrohydraulisch antreibbaren Achse angeordneten hydraulischen Maschine zur Leistungsübertragung in Fluidkommunikation stehen, so können die erste und zweite hydraulische Maschine auch mit derselben an der elektrohydraulisch antreibbaren Achse angeordneten hydraulischen Maschine zur Leistungsübertragung in Fluidkommunikation stehen. Insgesamt wird durch die zweite elektrohydraulische Antriebseinrichtung auf vorteilhafte Weise ein paralleler elektrohydraulischer Antriebstrang bereitgestellt, wodurch ein noch flexibleres Bereitstellen von Antriebsmoment an den beiden Achsen ermöglicht wird.

Nach einer Weiterbildung dieses Aspekts können an der elektrohydraulisch antreibbaren Achse zwei hydraulische Maschinen angeordnet sein. Hierbei kann eine der zwei hydraulischen Maschinen zur Leistungsübertragung in Fluidkommunikation mit der ersten hydraulischen Maschine der ersten elektrohydraulischen Antriebseinrichtung stehen, während eine andere der zwei hydraulischen Maschinen zur Leistungsübertragung in Fluidkommunikation mit der zweiten hydraulischen Maschine der zweiten elektrohydraulischen Antriebseinrichtung stehen kann. Mit anderen Worten stehen die erste hydraulische Maschine der ersten elektrohydraulischen Antriebseinrichtung und die zweite hydraulische Maschine der zweiten elektrohydraulischen Antriebseinrichtung jeweils mit unterschiedlichen an der elektrohydraulisch antreibbaren Achse angeordneten hydraulischen Maschinen zur Leistungsübertragung in Fluidkommunikation. Auf vorteilhafte Weise können dadurch die, an der elektrohydraulisch antreibbaren Achse angeordneten, hydraulischen Maschinen unabhängig voneinander betrieben werden, wodurch ein variables Verteilen der Antriebsmomente in Querrichtung ermöglicht wird. Dadurch kann gerade für Kurvenfahrten die Fahrstabilität verbessert werden bzw. durch gezieltes Umverteilen der Antriebsmomente auf Schlupf eines Rades reagiert werden.

Gemäß einem weiteren Aspekt der Erfindung können an der elektrohydraulisch antreibbaren Achse genau zwei hydraulische Maschinen angeordnet sein. Diese können dabei ferner unabhängig voneinander betreibbar sein. Der Ausdruck "unabhängig voneinander betreibbar" kann dabei sowohl das Bereitstellen eines unterschiedlichen Antriebsmoments als auch den Betrieb der beiden hydraulischen Maschinen in unterschiedlichen Betriebsmodi, z. B. eine hydraulische Maschine als Hydropumpe und die andere als Hydromotor, umfassen. Zudem oder alternativ können die zwei hydraulischen Maschinen auch an unterschiedlichen radseitigen Endbereichen der elektrohydraulisch antreibbaren Achse angeordnet sein. Anders ausgedrückt können die hydraulischen Maschinen außen an der Achse angeordnet sein, wodurch auf vorteilhafte Weise auf lange, elastischen Steckwellen verzichtet werden kann. Zudem oder alternativ können die beiden hydraulischen Maschinen auch als hydraulische Radnabenmaschinen ausgebildet sein, d. h., die hydraulischen Maschinen können direkt an der Radnabe platziert werden.

Um ferner auf vorteilhafte Weise auf die Verwendung eines Achsdifferentials zu verzichten, können nach einem weiteren Aspekt der Erfindung an der rein elektrisch antreibbaren Achse zwei elektrische Maschinen angeordnet sein. Die beiden elektrischen Maschinen können dabei je an unterschiedlichen radseitigen Endbereichen der rein elektrisch antreibbaren Achse angeordnet sein. Beispielsweise können die elektrischen Maschinen außen an der Achse angeordnet sein, wodurch auch hier auf vorteilhafte Weise auf lange, elastische Steckwellen verzichtet werden kann. Zudem oder alternativ können die beiden elektrischen Maschinen ferner als elektrische Radnabenmaschinen ausgebildet sein, wodurch die elektrischen Maschinen auf vorteilhafte Weise direkt an der Radnabe platziert werden können. Zudem oder alternativ können die beiden elektrischen Maschinen auch innerhalb eines Achsgehäuses der rein elektrisch antreibbaren Achse angeordnet sein. Auf vorteilhafte Weise sind die elektrischen Maschinen dadurch vor Nässe und Schmutz geschützt. Zudem oder alternativ können die beiden elektrischen Maschinen auch in einem mittleren Bereich der rein elektrisch antreibbaren Achse angeordnet sein. Vorzugsweise sind die beiden elektrischen Maschinen dabei in der Mitte eines Achsgehäuses der rein elektrisch antreibbaren Achse angeordnet. Dies bietet den Vorzug, dass der mit dem Wegfall des Achsdifferentials frei werdende Bauraum zur Anordnung der elektrischen Maschinen genutzt werden kann.

Gemäß einem weiteren Aspekt der Erfindung kann die elektrohydraulische Antriebsvorrichtung eine weitere rein elektrisch antreibbare Achse umfassen, an der mindestens eine elektrische Maschine angeordnet ist. Insgesamt weist die elektrohydraulische Antriebsvorrichtung somit drei Achsen - eine elektrohydraulisch antreibbare sowie zwei rein elektrisch antreibbare Achsen - auf. Dabei sollen die vorstehenden im Zusammenhang mit der "ersten" rein elektrisch antreibbaren Achse offenbarten Merkmale, auch im Zusammenhang mit der "weiteren" rein elektrisch antreibbaren Achse offenbart und beanspruchbar sein. D. h., auch an der "weiteren" rein elektrisch antreibbaren Achse können vorzugsweise zwei elektrische Maschinen angeordnet sein, die je an unterschiedlichen radseitigen Endbereichen der weiteren rein elektrisch antreibbaren Achse angeordnet sein können bzw. als elektrische Radnabenmaschinen ausgebildet sein können. Weiterhin können diese beiden elektrischen Maschinen auch innerhalb eines Achsgehäuses der "weiteren" rein elektrisch antreibbaren Achse angeordnet sein und/oder in einem mittleren Bereich der "weiteren" rein elektrisch antreibbaren Achse angeordnet sein. Ferner ist es für den Fachmann auch offensichtlich, dass die elektrohydraulische Antriebsvorrichtung darüber hinaus auch noch zusätzliche - d. h. mehr als zwei - rein elektrisch antreibbare Achsen und/oder weitere elektrohydraulisch antreibbare Achsen umfassen kann. Auf vorteilhafte Weise wird dadurch auch für mehrachsige Fahrzeuge eine Antriebsvorrichtung bereitgestellt, die ein unabhängiges und variables Bereitstellen von Antriebsmomenten an den Achsen ermöglicht.

Nach einer Weiterbildung dieses Aspekts können die beiden rein elektrisch antreibbaren Achsen als Doppelachsaggregat ausgebildet sein. Bei einem Doppelachsaggregat eines Nutzfahrzeugs sind im Unterschied zu einer Nachlauf- oder Vorlaufachse beide Achsen für gleiche Traglasten ausgelegt. Ferner sind beide Achsen gleichartig bereift, d. h., die Räder der beiden Achsen sind entweder alle doppelbereift oder alle einfach bereift. Die Räder der Achsen eines Doppelachsaggregats sind zudem nicht lenkbar. Weiterhin beträgt der Abstand der beiden Achsen in Fahrtrichtung des Nutzfahrzeugs in der Regel weniger als zwei Meter.

Ferner können sowohl die an der bzw. den rein elektrisch antreibbaren Achse(n) angeordneten elektrischen Maschinen, als auch die "erste" und/oder "zweite" elektrische Maschine(n) der ersten bzw. zweiten elektrohydraulischen Antriebseinrichtung als motorisch und generatorisch betreibbare elektrische Maschinen ausgebildet sein. Mit anderen Worten können die besagten elektrischen Maschinen ausgebildet sein, in einer ersten Betriebsart elektrische Energie in Bewegungsenergie umzuwandeln und in einer zweiten Betriebsart Bewegungsenergie in elektrische Energie. Zudem oder alternativ können auch die an der bzw. den elektrohydraulisch antreibbaren Achse(n) angeordneten hydraulischen Maschinen, sowie auch die "erste" und/oder "zweite" hydraulische Maschine(n) der ersten bzw. zweiten elektrohydraulischen Antriebseinrichtung sowohl als Hydraulikmotor und Hydraulikpumpe betreibbar sein. Anders ausgedrückt können die besagten hydraulischen Maschinen ausgebildet sein, in einer ersten Betriebsart hydraulische Energie in Bewegungsenergie umzuwandeln und in einer zweiten Betriebsart Bewegungsenergie in hydraulische Energie. Auch wenn vorliegend in erster Linie ein Antrieb der rein elektrisch antreibbaren Achse bzw. der elektrohydraulisch antreibbaren Achse vorgesehen ist, so kann durch die Doppelfunktion der jeweiligen elektrischen bzw. hydraulischen Maschinen auf vorteilhafte Weise auch ein rekuperativer Betrieb realisiert werden.

Gemäß einem weiteren Aspekt der Erfindung kann die elektrohydraulische Antriebsvorrichtung auch eine Steuereinrichtung umfassen. Die Steuereinrichtung kann dabei ausgebildet sein, die elektrohydraulische Antriebsvorrichtung in einem ersten Betriebsmodus zur Erhöhung der Fahrleistung zu betreiben. In diesem sollen sowohl die rein elektrisch antreibbare Achse als auch die elektrohydraulisch antreibbare Achse angetrieben werden. Auf vorteilhafte Weise kann so in Situationen, in denen eine hohe Traktion gefordert ist, ein möglichst großes Antriebsmoment von der elektrohydraulischen Antriebsvorrichtung bereitgestellt. Zudem oder alternativ kann die Steuereinrichtung auch ausgebildet sein, die elektrohydraulische Antriebsvorrichtung in einem zweiten Betriebsmodus zum rekuperativen Bremsbetrieb zu betreiben. In diesem soll mindestens eine elektrische Maschine der rein elektrisch antreibbaren Achse generatorisch und/oder mindestens eine hydraulische Maschine der elektrohydraulisch antreibbaren Achse als Hydraulikpumpe betrieben werden. Mit anderen Worten kann im zweiten Betriebsmodus an mindestens einer der Achsen kinetische Energie mittelbar oder unmittelbar in elektrische Energie umgewandelt werden. Vorzugsweise wird die so gewonnene elektrische Energie anschließend in einem elektrischen Energiespeicher der elektrohydraulischen Antriebsvorrichtung gespeichert. Auf vorteilhafte Weise kann dadurch der Energieverbrauch der elektrohydraulischen Antriebsvorrichtung gesenkt und dadurch deren Effizienz erhöht werden.

Nach einer Weiterbildung dieses Aspekts können ferner an der rein elektrisch antreibbaren Achse mindestens zwei elektrische Maschinen angeordnet sein und/oder an der elektrohydraulisch antreibbaren Achse mindestens zwei hydraulische Maschinen angeordnet sein. Vorzugsweise sind dabei zwei der elektrischen Maschinen bzw. zwei der hydraulischen Maschinen je an unterschiedlichen radseitigen Endbereichen der jeweiligen Achse angeordnet und/oder sind als Radnabenmaschinen ausgebildet. Ferner kann die Steuereinrichtung ausgebildet sein, die elektrohydraulische Antriebsvorrichtung in einem dritten Betriebsmodus zur Antriebsmomentverteilung zu betreiben. In diesem sollen zwei der elektrischen Maschinen und/oder zwei der hydraulischen Maschinen unterschiedliche Antriebsmomente bereitstellen. Mit anderen Worten kann im dritten Betriebsmodus ein asymmetrischer Antrieb erreicht werden. Beispielsweise kann im dritten Betriebsmodus das Antriebsmoment bei einem im Vergleich zu den übrigen Rädern langsamer drehenden Rad erhöht werden, um damit die Stabilität, z. B. bei einem Spurwechsel, zu erhöhen. Zudem oder alternativ kann im dritten Betriebsmodus aber auch das Antriebsmoment bei einem im Vergleich zu den übrigen Rädern schneller drehenden Rad erhöht werden. Ferner kann an einem offenbar durchdrehenden Rad auch das Antriebsmoment reduziert werden. Insgesamt kann damit auf vorteilhafte Weise das Fahrverhalten bzw. die Fahrstabilität verbessert werden.

Ferner wird erfindungsgemäß ein Kraftfahrzeug bereitgestellt, umfassend eine elektrohydraulische Antriebsvorrichtung, wie in diesem Dokument beschrieben. Vorzugsweise handelt es sich bei dem Kraftfahrzeug dabei um ein Nutzfahrzeug, wie z. B. einen Lastkraftwagen oder Omnibus. Auf vorteilhafte Weise wird somit ein mehrachsiges Kraftfahrzeug bereitgestellt, das ein unabhängiges und variables Bereitstellen von Antriebsmomenten an den Achsen ermöglicht, wodurch flexibel auf unterschiedliche Fahrsituationen reagiert werden kann.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine elektrohydraulische Antriebsvorrichtung für ein Kraftfahrzeug gemäß einer ersten Ausführungsform der Erfindung;
- Figur 2:: eine elektrohydraulische Antriebsvorrichtung für ein Kraftfahrzeug gemäß einer zweiten Ausführungsform der Erfindung; und
- Figur 3:: ein Kraftfahrzeug umfassend eine elektrohydraulische Antriebsvorrichtung gemäß einer Ausführungsform der Erfindung.

Gleiche oder funktional äquivalente Elemente sind dabei in allen Figuren mit denselben Bezugszeichen bezeichnet und zum Teil nicht gesondert beschrieben.

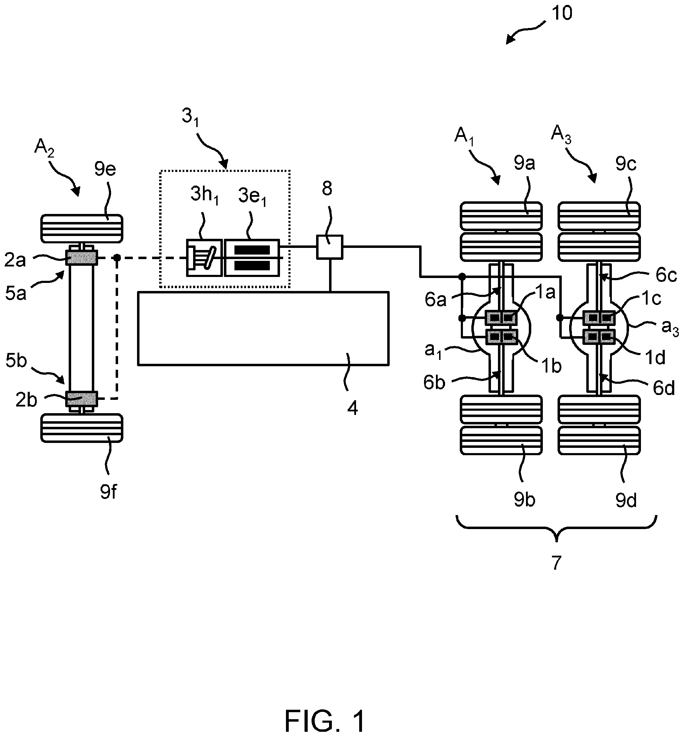

Figur 1 zeigt eine elektrohydraulische Antriebsvorrichtung 10 für ein Kraftfahrzeug 20, vorzugsweise ein Nutzfahrzeug, gemäß einer ersten Ausführungsform der Erfindung. Die elektrohydraulische Antriebsvorrichtung 10 umfasst hierbei ein rein elektrisch antreibbares Doppelachsaggregat 7 aus zwei rein elektrisch antreibbaren Achsen A₁ und A₃. Jede der beiden rein elektrisch antreibbaren Achsen A₁ und A₃ ist dabei als eine Starrachse mit einem entsprechenden Achsgehäuse a₁, a₃ ausgebildet. An jeder Achse sind ferner jeweils in einem mittleren Bereich innerhalb des entsprechenden Achsgehäuses a₁, a₃ zwei elektrische Maschinen 1a und 1b bzw. 1c und 1d angeordnet, die wiederum über eine entsprechende Radantriebswellen 6a, 6b, 6c, 6d mit je einem Rad 9a, 9b, 9c, 9d antriebsmäßig verbunden sind.

Weiterhin umfasst die elektrohydraulische Antriebsvorrichtung 10 eine elektrohydraulisch antreibbare Achse A₂, die vorliegend als eine lenkbare Starrachse ausgebildet ist. An dieser sind - jeweils an unterschiedlichen radseitigen Endbereichen 5a, 5b - zwei hydraulische Maschinen 2a, 2b in Form zweier hydraulischer Radnabenmaschinen angeordnet, die je mit einem Rad 9e, 9f in Antriebsverbindung stehen. Die beiden hydraulischen Maschinen 2a, 2b stehen ferner mittels entsprechender Hydraulikleitungen mit einer hydraulischen Maschine 3h₁, die nachfolgende zur besseren Unterscheidbarkeit als "erste" hydraulische Maschine 3h, bezeichnet werden soll, zur Leistungsübertragung in Fluidkommunikation. Anders ausgedrückt sind die besagten hydraulischen Maschinen 2a, 2b und 3h, fluidisch gekoppelt, um zwischen diesen hydraulische Leistung zu übertragen. Weiterhin umfasst die elektrohydraulische Antriebsvorrichtung 10 eine elektrische Maschine 3e₁, die mit der ersten hydraulischen Maschine zur Leistungsübertragung in Antriebsverbindung steht und daher nachfolgend als "erste" elektrische Maschine 3e, bezeichnet werden soll. Vorliegend ist dabei die Antriebsverbindung dadurch realisiert, dass eine Ausgangswelle der ersten elektrischen Maschine 3e, mit einer Eingangswelle der ersten hydraulischen Maschine 3h, verbunden ist. Aufgrund dieser Verbindung sowie der angrenzenden Anordnung können die erste elektrische Maschine 3e, und die erste hydraulische Maschine 3h, als eine bauliche Einheit aufgefasst werden, die als erste elektrohydraulische Antriebseinrichtung 3₁ bezeichnet werden soll.

Um die an den Achsen angeordneten elektrischen Maschinen 1a, 1b, 1c und 1d sowie die erste elektrische Maschine 3e, der ersten elektrohydraulischen Antriebseinrichtung 3₁ mit elektrischer Energie zu versorgen, stehen diese alle mittels elektrischer Leitungen mit einem zentralen elektrischen Energiespeicher 4, z. B. einer Traktionsbatterie, in Verbindung. Alternativ können jedoch auch mehrere dezentrale elektrische Energiespeicher vorgesehen sein, die jeweils nur mit einem Teil der elektrischen Maschinen in Verbindung stehen. Zur Steuerung der elektrischen Energieflüsse und damit der Antriebsmomente an den jeweiligen Rädern 9a - 9f umfasst die elektrohydraulische Antriebsvorrichtung 10 ferner auch eine Steuereinrichtung 8. Diese ist ausgebildet, die Energieflüsse variable zu steuern, wodurch die elektrohydraulische Antriebsvorrichtung 10 in unterschiedlichen Betriebsmodi betrieben werden kann. Auf vorteilhafte Weise kann so ein unabhängiges und variables Bereitstellen von Antriebsmomenten an den Achsen A₁, A₂, A₃ bzw. an den einzelnen Rändern 9a - 9f ermöglicht werden, wodurch mit der erfindungsgemäßen Antriebsvorrichtung 10 flexibel auf unterschiedliche Fahrsituationen (z. B. Schlupf der Antriebsräder) reagiert werden kann.

Darüber hinaus sind sowohl die an den Achsen A₁ und A₃ angeordneten elektrischen Maschinen 1a, 1b, 1c, 1d als auch die "erste" elektrische Maschine 3e, der ersten elektrohydraulischen Antriebseinrichtung 3₁ als motorisch und generatorisch betreibbare elektrische Maschinen ausgebildet. Ferner sind auch die an der elektrohydraulisch antreibbaren Achse A₂ angeordneten hydraulischen Maschinen 2a und 2b sowie auch die "erste" hydraulische Maschine 3h, der ersten elektrohydraulischen Antriebseinrichtung 3₁ sowohl als Hydraulikmotor als auch als Hydraulikpumpe betreibbar. Entsprechend kann somit neben einem entsprechenden Antrieb der jeweiligen Achsen A₁, A₂, A₃ bzw. Räder 9a - 9f auf vorteilhafte Weise auch ein rekuperativer Betrieb realisiert werden, bei dem Bewegungsenergie unmittelbar oder mittelbar in elektrische Energie umgewandelt wird, die zum Laden des elektrischen Energiespeichers 4 verwendet werden kann.

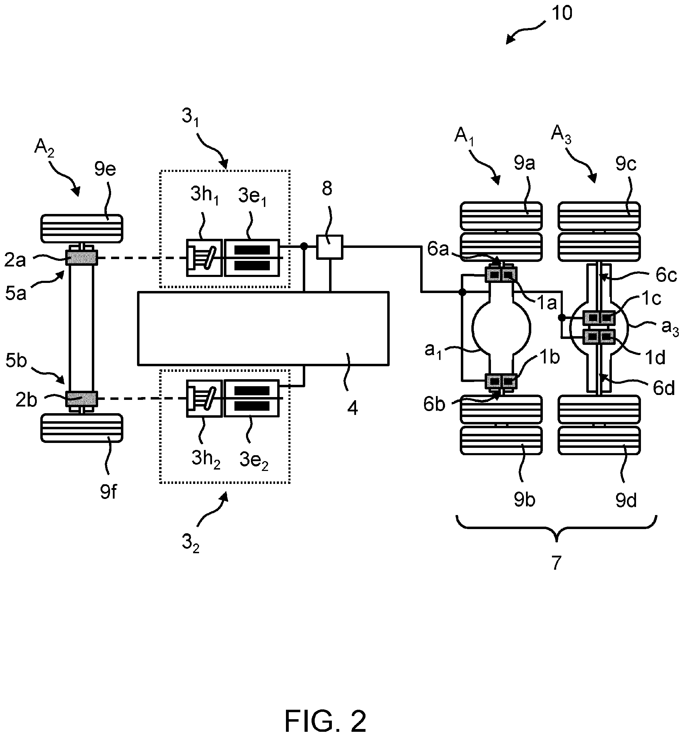

Figur 2 zeigt eine elektrohydraulische Antriebsvorrichtung 10 für ein Kraftfahrzeug 20 gemäß einer zweiten Ausführungsform der Erfindung. Erneut umfasst die elektrohydraulische Antriebsvorrichtung 10 ein Doppelachsaggregat 7 mit zwei rein elektrisch antreibbare Achsen A₁ und A₃ sowie eine elektrohydraulisch antreibbare Achse A₂. Im Unterschied zu der in Figur 1 gezeigten Ausführungsform sind die beiden elektrischen Maschinen 1a und 1b der rein elektrisch antreibbaren Achse A₁ vorliegend nicht in einem mittleren Bereich der Achse, sondern jeweils an unterschiedlichen radseitigen Endbereichen angeordnet und als elektrische Radnabenmaschinen ausgebildet.

Ferner unterscheidet sich die Versorgung der hydraulischen Maschinen 2a und 2b der elektrohydraulisch antreibbaren Achse A₂. Während in der in Figur 1 gezeigten Ausführungsform die elektrohydraulische Antriebsvorrichtung 10 nur eine, als "erste" bezeichnete, elektrohydraulische Antriebseinrichtung 3₁ umfasste, die mit beiden hydraulischen Maschinen 2a und 2b in Fluidkommunikation stand, sind vorliegend zwei elektrohydraulische Antriebseinrichtungen 3₁ und 3₂ vorgesehen. Konkret umfasst die elektrohydraulische Antriebsvorrichtung 10 somit eine "erste" elektrohydraulische Antriebseinrichtung 3₁, die - wie zuvor - eine erste elektrische Maschine 3e, und eine erste hydraulische Maschine 3h₁, die mit der ersten elektrischen Maschine 3e, zur Leistungsübertragung in Antriebsverbindung steht, aufweist. Allerdings steht die erste hydraulische Maschine 3h, nur mit einer der beiden an der elektrohydraulisch antreibbaren Achse A₂ angeordneten hydraulischen Maschinen 2a, 2b zur Leistungsübertragung in Fluidkommunikation (vorliegend 2a). Zum Antrieb der weiteren hydraulischen Maschine 2b umfasst in dieser Ausführungsform die elektrohydraulische Antriebsvorrichtung 10 eine "zweite" elektrohydraulische Antriebseinrichtung 3₂. Auch diese umfasst dabei eine als "zweite" elektrische Maschine 3e₂ bezeichnete elektrische Maschine sowie eine als "zweite" hydraulische Maschine 3h₂ bezeichnete hydraulische Maschine, die mit der zweiten elektrischen Maschine 3e₂ zur Leistungsübertragung in Antriebsverbindung steht. Die zweite hydraulische Maschine 3h₂ steht weiterhin mit der an der elektrohydraulisch antreibbaren Achse A₂ angeordneten hydraulischen Maschinen 2b zur Leistungsübertragung in Fluidkommunikation. Auf vorteilhafte Weise können dadurch die, an der elektrohydraulisch antreibbaren Achse A₂ angeordneten, hydraulischen Maschinen 2a und 2b unabhängig voneinander betrieben werden, wodurch ein variables Verteilen der Antriebmomente in Querrichtung ermöglicht wird. Dadurch kann gerade für Kurvenfahrten die Fahrstabilität verbessert werden bzw. durch gezieltes Umverteilen der Antriebsmomente auf Schlupf der Räder 9e bzw. 9f reagiert werden.

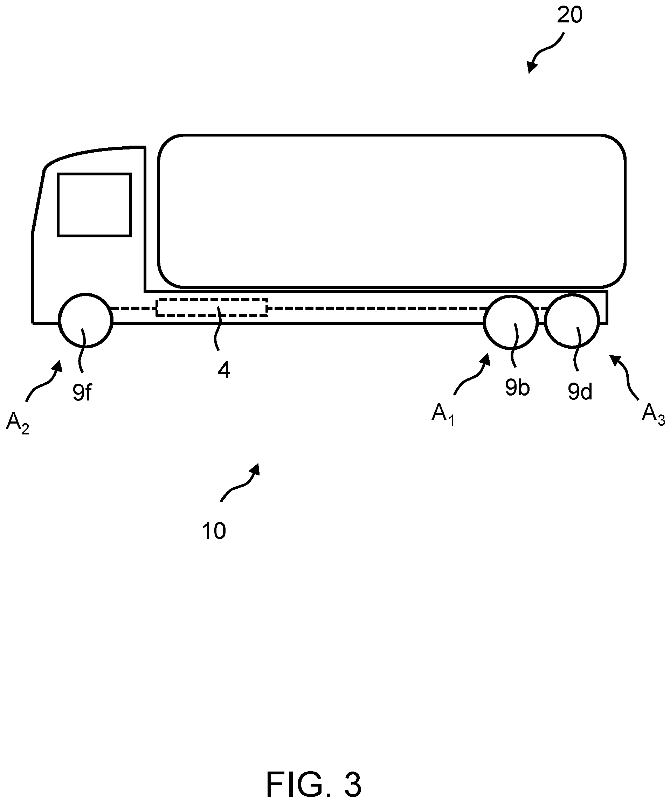

Figur 3 zeigt ein Kraftfahrzeug 20, umfassend eine elektrohydraulische Antriebsvorrichtung 10 gemäß einer Ausführungsform der Erfindung. Vorliegend handelt es sich bei dem Kraftfahrzeug 20 um ein Nutzfahrzeug in Form eines Lastkraftwagens mit drei antreibbaren Achsen A₁, A₂ und A₃. Auf vorteilhafte Weise wird somit ein mehrachsiges Kraftfahrzeug 20 bereitgestellt, das ein unabhängiges und variables Bereitstellen von Antriebsmomenten an den Achsen A₁, A₂, A₃ ermöglicht, wodurch flexibel auf unterschiedliche Fahrsituationen reagiert werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1a-1d: Elektrische Maschine
- 2a, 2b: Hydraulische Maschine
- 3₁: Erste elektrohydraulische Antriebseinrichtung
- 3₂: Zweite elektrohydraulische Antriebseinrichtung
- 3e,: Erste elektrische Maschine
- 3h₁: Erste hydraulische Maschine
- 3e₂: Zweite elektrische Maschine
- 3h₂: Zweite hydraulische Maschine
- 4: Energiespeicher
- 5a, 5b: Radseitiger Endbereich
- 6a-6d: Radantriebswelle
- 7: Doppelachsaggregat
- 8: Steuereinrichtung
- 9a - 9f: Räder
- 10: Elektrohydraulische Antriebsvorrichtung
- 20: Kraftfahrzeug
- A₁, A₃: Rein elektrisch antreibbare Achse
- A₂: Elektrohydraulisch antreibbare Achse
- a₁-a₃: Achsgehäuse

## Patentansprüche

1. Elektrohydraulische Antriebsvorrichtung (10) für ein Kraftfahrzeug (20), vorzugsweise Nutzfahrzeug, umfassend
a) eine rein elektrisch antreibbare Achse (A₁), an der mindestens eine elektrische Maschine (1a) angeordnet ist;
b) eine elektrohydraulisch antreibbare Achse (A₂), an der mindestens eine hydraulische Maschine (2a), angeordnet ist; und
c) eine erste elektrohydraulische Antriebseinrichtung (3₁), umfassend
- eine erste elektrische Maschine (3e₁) und
- eine erste hydraulische Maschine (3h₁), die mit der ersten elektrischen Maschine (3e₁) zur Leistungsübertragung in Antriebsverbindung steht und die mit mindestens einer an der elektrohydraulisch antreibbaren Achse (A₂) angeordneten hydraulischen Maschine (2a) zur Leistungsübertragung in Fluidkommunikation steht.

2. Elektrohydraulische Antriebsvorrichtung (10) nach Anspruch 1, **dadurch gekennzeichnet, dass** die erste elektrische Maschine (3e₁) und die erste hydraulische Maschine (3h₁) der ersten elektrohydraulischen Antriebseinrichtung (3₁),
a) eine bauliche Einheit bilden; und/oder
b) miteinander verbunden sind; und/oder
c) aneinander angrenzen oder nebeneinander angeordnet sind; und/oder
d) von einem gemeinsamen Gehäuse umhaust werden.

3. Elektrohydraulische Antriebsvorrichtung (10) nach einem der vorherigen Ansprüche, **dadurch gekennzeichnet, dass** die erste elektrische Maschine (3e₁) der ersten elektrohydraulischen Antriebseinrichtung (3₁)
a) nicht an der rein elektrisch antreibbaren Achse (A₁) oder der elektrohydraulisch antreibbaren Achse (A₂) angeordnet ist; und/oder
b) mit der rein elektrisch antreibbaren Achse (A₁) nicht antriebsmäßig verbunden oder verbindbar ist; und/oder
c) ausschließlich mit der zweiten hydraulischen Maschine (3h₁) zur Leistungsübertragung in Antriebsverbindung steht.

4. Elektrohydraulische Antriebsvorrichtung (10) nach einem der vorherigen Ansprüche, **dadurch gekennzeichnet, dass**
a) die rein elektrisch antreibbare Achse (A₁) eine Starrachse ist; und/oder
b) die elektrohydraulisch antreibbare Achse (A₂) eine lenkbare Achse ist, vorzugsweise eine lenkbare Starrachse oder eine lenkbare Achse mit Einzelradaufhängungen.

5. Elektrohydraulische Antriebsvorrichtung (10) nach einem der vorherigen Ansprüche, **dadurch gekennzeichnet, dass** die elektrohydraulische Antriebsvorrichtung (10)
a) einen elektrischen Energiespeicher (4) umfasst, der eingerichtet ist, die mindestens eine erste elektrische Maschine (1a) und die an der rein elektrisch antreibbaren Achse (A₁) angeordnete mindestens eine elektrische Maschine (1a) mit elektrischer Energie zu versorgen; und/oder
b) verbrennungsmotorfrei ausgeführt ist und/oder rein mit elektrischer Energie antreibbar ist.

6. Elektrohydraulische Antriebsvorrichtung (10) nach einem der vorherigen Ansprüche, **dadurch gekennzeichnet, dass** an der elektrohydraulisch antreibbaren Achse (A₂) zwei hydraulische Maschinen (2a, 2b) angeordnet sind, die beide zur Leistungsübertragung in Fluidkommunikation mit der ersten hydraulischen Maschine (3h₁) der ersten elektrohydraulischen Antriebseinrichtung (3₁) stehen.

7. Elektrohydraulische Antriebsvorrichtung (10) nach einem der vorherigen Ansprüche, **gekennzeichnet durch** eine zweite elektrohydraulische Antriebseinrichtung (3₂), umfassend
- eine zweite elektrische Maschine (3e₂) und
- eine zweite hydraulische Maschine (3h₂), die mit der zweiten elektrischen Maschine (3e₂) zur Leistungsübertragung in Antriebsverbindung steht und die mit mindestens einer an der elektrohydraulisch antreibbaren Achse (A₂) angeordneten hydraulischen Maschine (2a) zur Leistungsübertragung in Fluidkommunikation steht.

8. Elektrohydraulische Antriebsvorrichtung (10) nach Anspruch 7, **dadurch gekennzeichnet, dass** an der elektrohydraulisch antreibbaren Achse (A₂) zwei hydraulische Maschinen (2a, 2b) angeordnet sind, wobei
a) eine der zwei hydraulischen Maschinen (2a, 2b) zur Leistungsübertragung in Fluidkommunikation mit der ersten hydraulischen Maschine (3h₁) der ersten elektrohydraulischen Antriebseinrichtung (3₁) steht; und
b) die andere der zwei hydraulischen Maschinen (2a, 2b) zur Leistungsübertragung in Fluidkommunikation mit der zweiten hydraulischen Maschine (3h₂) der zweiten elektrohydraulischen Antriebseinrichtung (3₂) steht.

9. Elektrohydraulische Antriebsvorrichtung (10) nach einem der vorherigen Ansprüche, **dadurch gekennzeichnet, dass** an der elektrohydraulisch antreibbaren Achse (A₂) genau zwei hydraulische Maschinen (2a, 2b), angeordnet sind, die
a) unabhängig voneinander betreibbar sind; und/oder
b) an unterschiedlichen radseitigen Endbereichen (5a, 5b) der elektrohydraulisch antreibbaren Achse (A₂) angeordnet sind; und/oder
c) als hydraulische Radnabenmaschinen ausgebildet sind.

10. Elektrohydraulische Antriebsvorrichtung (10) nach einem der vorherigen Ansprüche, **dadurch gekennzeichnet, dass** an der rein elektrisch antreibbaren Achse (A₁) zwei elektrische Maschinen (1a, 1b) angeordnet sind, die
a) in einem mittleren Bereich der rein elektrisch antreibbaren Achse (A₁) angeordnet sind; und/oder
b) innerhalb eines Achsgehäuses (a₁) der rein elektrisch antreibbaren Achse (A₁) angeordnet sind; und/oder
c) in der Mitte eines Achsgehäuses (a₁) der rein elektrisch antreibbaren Achse (A₁) angeordnet sind.

11. Elektrohydraulische Antriebsvorrichtung (10) nach einem der Ansprüche 1 bis 9, **dadurch gekennzeichnet, dass** an der rein elektrisch antreibbaren Achse (A₁) zwei elektrische Maschinen (1a, 1b) angeordnet sind, die
a) je an unterschiedlichen radseitigen Endbereichen der rein elektrisch antreibbaren Achse (A₁) angeordnet sind; und/oder
b) als elektrische Radnabenmaschinen ausgebildet sind.

12. Elektrohydraulische Antriebsvorrichtung (10) nach einem der vorherigen Ansprüche, **gekennzeichnet durch** eine weitere rein elektrisch antreibbare Achse (A₃), an der mindestens eine elektrische Maschine (1c) angeordnet ist, wobei vorzugsweise die beiden rein elektrisch antreibbaren Achsen (A₁, A₃) als Doppelachsaggregat (7) ausgebildet sind.

13. Elektrohydraulische Antriebsvorrichtung (10) nach einem der vorherigen Ansprüche, **gekennzeichnet durch** eine Steuereinrichtung (8), die ausgebildet ist, die elektrohydraulische Antriebsvorrichtung (10)
a) in einem ersten Betriebsmodus zur Erhöhung der Fahrleistung zu betreiben, in dem sowohl die rein elektrisch antreibbare Achse (A₁) als auch die elektrohydraulisch antreibbare Achse (A₂) angetrieben werden; und/oder
b) in einem zweiten Betriebsmodus zum rekuperativen Bremsbetrieb zu betreiben, in dem mindestens eine elektrische Maschine (1a) der rein elektrisch antreibbaren Achse (A₁) generatorisch betrieben wird und/oder mindestens eine hydraulische Maschine (2a) der elektrohydraulisch antreibbaren Achse (A₂) als Hydraulikpumpe betrieben wird.

14. Elektrohydraulische Antriebsvorrichtung (10) nach Anspruch 13, **dadurch gekennzeichnet, dass**
a) an der rein elektrisch antreibbaren Achse (A₁) mindestens zwei elektrische Maschinen (1a, 1b) angeordnet sind und/oder an der elektrohydraulisch antreibbaren Achse (A₂) mindestens zwei hydraulische Maschinen (2a, 2b) angeordnet sind; und
b) die Steuereinrichtung (8) ausgebildet ist, die elektrohydraulische Antriebsvorrichtung (10) in einem dritten Betriebsmodus zur Antriebsmomentverteilung zu betreiben, in dem zwei der elektrischen Maschinen (1a, 1b) und/oder zwei der hydraulischen Maschinen (2a, 2b) unterschiedliche Antriebsmomente bereitstellen.

15. Kraftfahrzeug (20), vorzugsweise Nutzfahrzeug wie z. B. ein Lastkraftwagen oder Omnibus, umfassend eine elektrohydraulische Antriebsvorrichtung (10) nach einem der vorherigen Ansprüche.
